# EUROPÄISCHE PATENTSCHRIFT

(11) **EP 1 428 995 B1**
(45) Veröffentlichungstag und Bekanntmachung des Hinweises auf die Patenterteilung: **19.04.2006**
(21) Anmeldenummer: 03026506.0
(22) Anmeldetag: 17.11.2003
(51) Int. Cl.: F01N 7/18, B60K 13/04

(54) **Haltevorrichtung, insbesondere zum elastischen Aufhängen einer Abgasanlage eines Kraftfahrzeugs**
Holding device, particularly for elastically supporting an exhaust system of a motor vehicle
Dispositif de fixation, notamment pour suspendre élastiquement un dispositif d'échappement d'un véhicule automobile

(30) Priorität: 10.12.2002 DE 10257660
(43) Veröffentlichungstag der Anmeldung: 16.06.2004
(73) Patentinhaber: Trelleborg Automotive Technical Centre GmbH, 56203 Höhr-Grenzhausen (DE)
(72) Erfinder: Pecot, Luc, 44240 La chapelle/erdre (FR); Barrier, Gonzague, 44130 Fay de Bretagne (FR)
(74) Vertreter: Schober, Christoph D.

(56) Entgegenhaltungen:
- EP-A- 0 505 325
- DE-A- 19 831 114
- DE-U- 29 506 970
- US-B1- 6 170 782

## Beschreibung

Die Erfindung betrifft eine Haltevorrichtung, die insbesondere zum elastischen Aufhängen einer Abgasanlage eines Kraftfahrzeugs dient. Die Haltevorrichtung weist einen ersten Befestigungskörper, der an einem ersten Bauteil befestigbar ist, und einen zweiten Befestigungskörper, der an einem zweiten Bauteil befestigbar ist, auf. Zudem ist die Haltevorrichtung mit einem zumindest in einer ersten Schwingungsrichtung elastisch verformbaren Dämpfungskörper versehen, der den ersten Befestigungskörper und den zweiten Befestigungskörper miteinander verbindet. Weiterhin weist die Haltevorrichtung ein im wesentlichen undehnbares Band auf, das an einem oberen Ende mit dem ersten Befestigungskörper und an einem unteren Ende mit dem zweiten Befestigungskörper verbunden ist und eine Ausdehnung des Dämpfungskörpers in der ersten Schwingungsrichtung begrenzt.

Die Abgasanlage eines Kraftfahrzeugs ist gewöhnlich an mehreren Befestigungsstellen an dem Unterboden des Kraftfahrzeugs befestigt. Zu diesem Zweck finden Haltevorrichtungen Anwendung, die zugleich die Funktion haben, eine Übertragung von Schwingungen auf die Karosserie des Kraftfahrzeugs, die das Innengeräusch der Fahrgastzelle beeinträchtigen, weitgehend zu vermeiden.

Eine derartige Haltevorrichtung wird in der EP 0 816 734 A2 beschrieben. Die bekannte Haltevorrichtung weist einen einteiligen Gummikörper mit zwei voneinander beabstandeten Befestigungsbereichen auf, die durch zwei elastisch verformbare Arme miteinander verbunden sind. Die Arme sind im Querschnitt V-förmig ausgestaltet, so daß sich bei einer Zug- oder Druckbeanspruchung eine hohe Verformungsfähigkeit der Arme ergibt. Um eine übermäßige Verformung der Arme, beispielsweise infolge einer Stoßkraft, zu vermeiden, sind die Befestigungsbereiche zusätzlich durch ein undehnbares Band miteinander verbunden. Das Band begrenzt zwar die maximale Ausdehnung der Arme bei einer auftretenden Zugbeanspruchung zwischen den Befestigungsbereichen, bleibt aber ohne Wirkung bei einer Druckbeanspruchung.

Weiterhin beschreibt die DE 295 06 970 U1 eine Vorrichtung zur Aufhängung der Abgasanlage eines Kraftfahrzeugs, die einen aus einem elastischen Material, zum Beispiel Silikonkautschuk, bestehenden Dämpfungskörper aufweist. Der Dämpfungskörper ist mit zwei Öffnungen versehen, die zur Aufnahme von Aufhängeringen dienen, um den Dämpfungskörper einerseits an dem Kraftfahrzeug und andererseits an der Abgasanlage zu befestigen. Zwischen den Öffnungen weist der Dämpfungskörper einen doppel-T-förmigen Hohlraum auf, der zwei einander gegenüberliegende Anschlagflächen bildet, die ein Zusammendrücken des Dämpfungskörpers in einer ersten Schwingungsrichtung begrenzen. Darüber hinaus ist um den Dämfpungskörper ein im wesentlichen undehnbares Gewebeband geschlungen, das mittels Noppen lösbar an dem Dämpfungskörper befestigt ist und eine Ausdehnung des Dämpfungskörpers in der ersten Schwingungsrichtung begrenzt.

Der Erfindung liegt die Aufgabe zugrunde, eine Haltevorrichtung der eingangs genannten Art dahingehend weiterzubilden, daß sich eine vorgegebene Verformung des Dämpfungskörpers sowohl bei einer Zug- als auch bei einer Druckbeanspruchung erzielen läßt.

Zur Lösung dieser Aufgabe wird eine Haltevorrichtung mit den Merkmalen gemäß Anspruch 1 vorgeschlagen.

Vorteilhafte Weiterbildungen der erfindungsgemäßen Haltevorrichtung stellen die Gegenstände der Ansprüche 2 bis 16 dar.

Die erfindungsgemäße Haltevorrichtung beruht auf der Erkenntnis, die Verformung des Dämpfungskörpers bei einer Druckbeanspruchung durch einen Anschlagkörper zu begrenzen. Der Anschlagkörper verhindert, daß der Dämpfungskörper bei einer Druckbeanspruchung übermäßig gestaucht wird. Darüber hinaus weist der erste Befestigungskörper einen im Querschnitt U-förmigen Anschlagabschnitt auf. Zudem ist der Anschlagkörper mit einer Kuppe versehen, die in den Anschlagabschnitt hinein ragt. Auf diese Weise bilden die Innenflächen des Anschlagabschnitts Anschlagflächen für die Kuppe in zwei Raumrichtungen. Der Anschlagkörper kann somit Schwingungen dämpfen, die sowohl in der ersten Schwingungsrichtung als auch in einer von der ersten Schwingungsrichtung abweichenden zweiten Schwingungsrichtung auftreten.

Somit ist es möglich, durch eine Biege- oder Torsionsbeanspruchung hervorgerufene Verformungen des Dämpfungskörpers durch den Anschlagkörper gezielt zu beschränken. Auf diese Weise ist es zudem möglich, in weiteren Schwingungsrichtungen auftretende Schwingungen zu dämpfen.

In Hinsicht auf eine einfache Montage ist es von Vorteil, das Band an dem unteren Ende mit einem ersten Befestigungsschuh zu versehen, der formschlüssig und/oder kraftschlüssig an dem zweiten Befestigungskörper festlegbar ist. Der Befestigungsschuh und das Band können als vorgefertigte Baueinheit ausgestaltet sein, welche die Endmontage der Haltevorrichtung erleichtert.

Von besonderem Vorteil ist ferner, den ersten Befestigungsschuh mit dem Anschlagkörper zu verbinden. Der Befestigungsschuh dient somit gleichzeitig als Halterung für den Anschlagkörper. Die Verbindung des Anschlagkörpers mit dem zweiten Befestigungskörper durch den Befestigungsschuh kann vorläufig sein, beispielsweise als Transportsicherung, falls der Anschlagkörper und der zweite Befestigungskörper erst beim Einbau der Haltevorrichtung endgültig aneinander befestigt werden. Hierbei ist es vorteilhaft, wenn der erste Befestigungsschuh wenigstens einen Rasthaken aufweist, der in einer Öffnung des Anschlagkörpers einrastet. Der Rasthaken gewährleistet eine praxisgerechte Steckverbindung, die für eine vorläufige Fixierung des Anschlagkörpers an dem zweiten Befestigungskörper einen ausreichenden Halt bietet.

Weiterhin ist es in Hinsicht auf eine einfache Montage von Vorteil, das Band an dem oberen Ende mit einem zweiten Befestigungsschuh zu versehen, der formschlüssig und/oder kraftschlüssig an dem ersten Befestigungskörper festlegbar ist. Um einen montagegerechten Formschluß zwischen dem ersten Befestigungskörper und dem zweiten Befestigungsschuh zu realisieren, weist der erste Befestigungskörper vorteilhafterweise eine Öffnung auf, durch die der zweite Befestigungsschuh durchsteckbar ist, wobei die Öffnung mit einer Ausnehmung verbunden ist, deren Abmessungen größer als die des Bandes und kleiner als die des zweiten Befestigungsschuhs sind. Die Öffnung ermöglicht, den zweiten Befestigungsschuh beispielsweise auf die dem zweiten Befestigungskörper abgewandte Seite des ersten Befestigungskörpers zu bringen. Das mit dem zweiten Befestigungsschuh verbundene Band kann daraufhin in die Ausnehmung geführt werden, so daß der über größere Abmessungen als die Ausnehmung verfügende zweite Befestigungsschuh das Band formschlüssig an dem ersten Befestigungskörper festlegt.

Um eine zuverlässige Anordnung des zweiten Befestigungsschuhs an dem ersten Befestigungskörper sicherzustellen, weist die Ausnehmung vorteilhafterweise einen Querschlitz und einen den Querschlitz mit der Öffnung verbindenden Längsschlitz auf, wobei der Querschlitz annähernd senkrecht zu dem Längsschlitz angeordnet ist. Der Längsschlitz ermöglicht, das Band von der Öffnung in den Querschlitz zu führen. In dem Querschlitz wird das Band sodann gedreht, und zwar derart, daß das Band der Breite nach in dem Querschlitz angeordnet ist. Das Band kann auf diese Weise von allein nicht aus dem Querschlitz gelangen.

Als vorteilhaft hat es sich zudem herausgestellt, wenn der erste Befestigungskörper einen Absatz aufweist und der zweite Befestigungsschuh mit einer Auflagefläche versehen ist, die an dem Absatz anliegt. Der Absatz befindet sich zweckmäßigerweise im Bereich des Querschlitzes, so daß sichergestellt ist, daß sich die Auflagefläche des zweiten Befestigungsschuhs bei einer an dem Band angreifenden Zugkraft an dem Absatz des ersten Befestigungskörpers abstützt. Zweckmäßig ist überdies, wenn sich der Längsschlitz in den Bereich des Absatzes erstreckt und der zweite Befestigungsschuh mit einem Steg versehen ist, der in den Längsschlitz eingreift. Denn auf diese Weise läßt sich die Auflagefläche des zweiten Befestigungsschuhs gegenüber dem Absatz ausrichten, so daß eine präzise Lage des zweiten Befestigungsschuhs an dem ersten Befestigungskörper sichergestellt ist.

Um eine wirksame Dämpfung zu erreichen, ist der erste Befestigungskörper vorteilhafterweise zumindest im Bereich des Anschlagabschnitts mit einem Überzug versehen, der aus einem elastisch verformbaren Werkstoff besteht. Der beispielsweise die Innenflächen des Anschlagabschnitts verkleidende Überzug dämpft die Schwingungsamplituden des Anschlagkörpers ab.

Der Überzug ist zweckmäßigerweise einteilig mit dem Dämpfungskörper hergestellt, um eine einfache und kostengünstige Fertigung sicherzustellen. Bevorzugt sind der Dämpfungskörper und/oder die Kuppe und/oder der Überzug aus einem elastomeren Werkstoff, vorzugsweise Gummi, gefertigt. Der Dämpfungskörper und der Überzug können beispielsweise als einteiliges Formteil ausgebildet sein, das durch Vulkanisation sowohl mit dem ersten Befestigungskörper als auch mit dem zweiten Befestigungskörper stoffschlüssig verbunden ist.

In Hinsicht auf eine vergleichsweise hohe Verformungsfähigkeit des Dämpfungskörpers in der ersten Schwingungsrichtung ist es von Vorteil, wenn der Dämpfungskörper annähernd orthogonal zur ersten Schwingungsrichtung wenigstens eine Einschnürung aufweist. Zweckmäßigerweise ist der Dämpfungskörper an gegenüberliegenden Seiten mit einer Einschnürung versehen, so daß sich eine symmetrische Ausgestaltung ergibt. Um eine vergleichsweise hohe Verformungsfähigkeit des Dämpfungskörpers zu gewährleisten, ist es ferner von Vorteil, den Dämpfungskörper mit wenigstens einer Öffnung zu versehen.

In einer bevorzugten Ausgestaltung der erfindungsgemäßen Haltevorrichtung sind der erste Befestigungskörper und/oder der zweite Befestigungskörper und/oder der Anschlagkörper aus Metall gefertigt. Dies bietet zum einen den Vorteil, daß beispielsweise der erste Befestigungskörper und der zweite Befestigungskörper über eine höhere Steifigkeit verfügen als der Dämpfungskörper, so daß auftretende Schwingungen ausschließlich von dem Dämpfungskörper aufgenommen werden. Zum anderen haben der erste Befestigungskörper und der zweite Befestigungskörper auf diese Weise eine verhältnismäßig hohe Festigkeit, die eine sichere Befestigung an dem ersten Bauteil beziehungsweise an dem zweiten Bauteil gewährleistet.

Demgegenüber besteht das Band bevorzugt aus einem Gewebe, das vorzugsweise aus Polyesterfasern oder Polyamidfasern gefertigt ist, um eine vergleichsweise hohe Reißfestigkeit sicherzustellen.

Einzelheiten und weitere Vorteile der erfindungsgemäßen Haltevorrichtung ergeben sich aus der nachfolgenden Beschreibung eines bevorzugten Ausführungsbeispieles. In denen das Ausführungsbeispiel lediglich schematisch darstellenden Zeichnungen veranschaulichen im einzelnen:
- Fig. 1: eine perspektivische Schnittansicht einer Haltevorrichtung;
- Fig. 2: einen Längsschnitt durch die Haltevorrichtung gemäß Fig. 1;
- Fig. 3: eine vergrößerte Darstellung des in Fig. 2 mit III gekennzeichneten Bereichs;
- Fig. 4: einen Schnitt gemäß der Linie IV in Fig. 3;
- Fig. 5: eine Rückansicht der Haltevorrichtung gemäß Fig. 1;
- Fig. 6: einen Schnitt gemäß der Linie VI-VI in Fig. 5;
- Fig. 7: eine Vorderansicht der Haltevorrichtung gemäß Fig. 1;
- Fig. 8: einen Schnitt gemäß der Linie VIII-VIII in Fig. 7 und
- Fig. 9: eine perspektivische Darstellung eines mit Befestigungsschuhen versehenen Bandes.

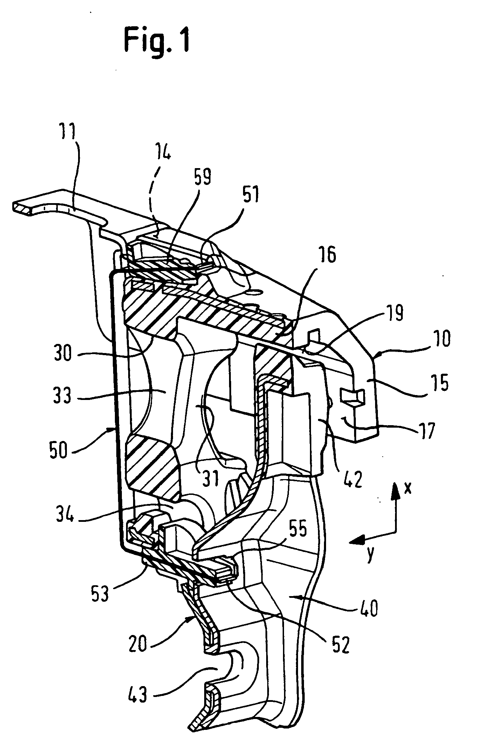

Die in Fig. 1 dargestellte Haltevorrichtung dient dazu, eine Abgasanlage elastisch und damit schwingungsgedämpft an dem Unterboden eines Kraftfahrzeuges aufzuhängen. Die Haltevorrichtung weist zu diesem Zweck einen ersten Befestigungskörper 10 auf, der an dem nicht dargestellten Unterboden befestigbar ist. Zudem weist die Haltevorrichtung einen zweiten Befestigungskörper 20 auf, an dem beispielsweise ein Rohr der Abgasanlage befestigbar ist. Der erste Befestigungskörper 10 und der zweite Befestigungskörper 20 bestehen aus Metall und sind durch Umformen gefertigt. Ein beispielsweise aus Gummi bestehender Dämpfungskörper 30 erstreckt sich der Länge nach in einer ersten Schwingungsrichtung x und verbindet den ersten Befestigungskörper 10 mit dem zweiten Befestigungskörper 20. Der Dämpfungskörper 30 ist durch Vulkanisation stoffschlüssig sowohl an dem ersten Befestigungskörper 10 als auch an dem zweiten Befestigungskörper 20 befestigt.

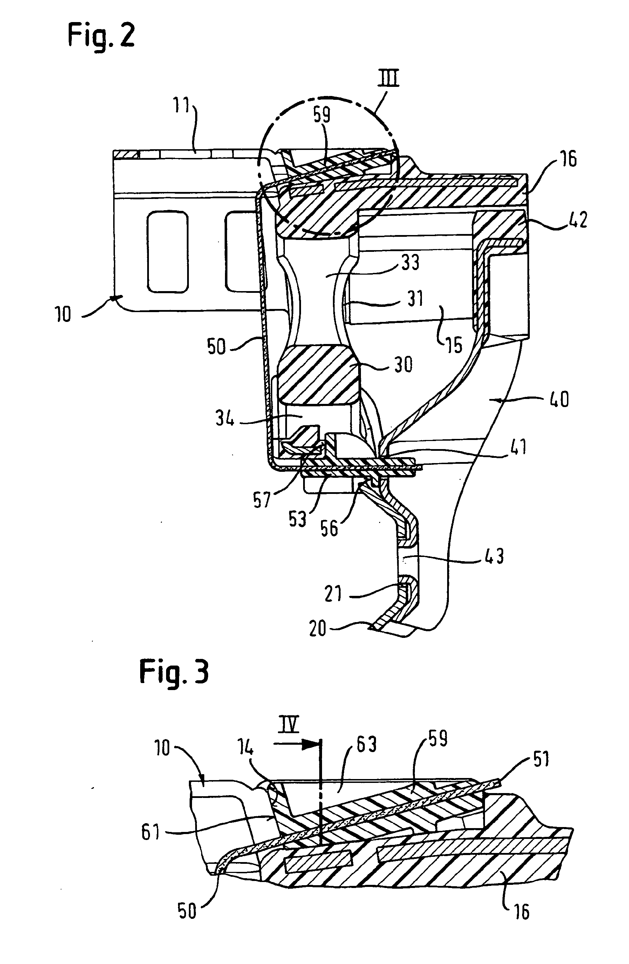

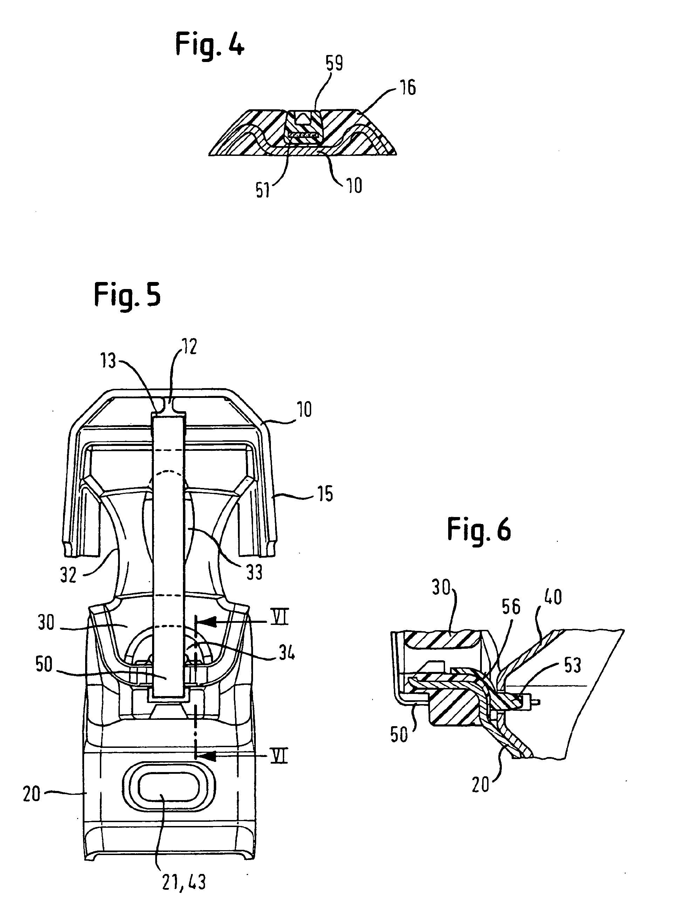

Wie insbesondere in den Fig. 2 und 5 zu erkennen ist, weist der Dämpfungskörper 30 annähernd orthogonal zur Schwingungsrichtung x symmetrisch angeordnete Einschnürungen 31, 32 auf, die dem Dämpfungskörper 30 eine Taille verleihen. Zudem ist der Dämpfungskörper 30 mit Öffnungen 33, 34 versehen, die sich annähernd orthogonal zur Schwingungsrichtung x erstrecken. Die Einschnürungen 31, 32 und die Öffnungen 33, 34 tragen dazu bei, daß der schon aufgrund seiner Werkstoffeigenschaften elastisch verformbare Dämpfungskörper 30 in Schwingungsrichtung x über eine verhältnismäßig hohe elastische Verformungsfähigkeit verfügt.

Um eine übermäßige Ausdehnung des Dämpfungskörpers 30 in Schwingungsrichtung x zu vermeiden, ist ein flaches, nahezu undehnbares Band 50 vorgesehen, das aus einem aus Polyesterfasern oder Polyamidfasern gefertigten Gewebe besteht. Das Band 50 weist ein oberes Ende 51 auf, das lösbar mit dem ersten Befestigungskörper 10 verbunden ist. Zudem weist das Band 50 ein unteres Ende 52 auf, das lösbar mit dem zweiten Befestigungskörper 20 verbunden ist.

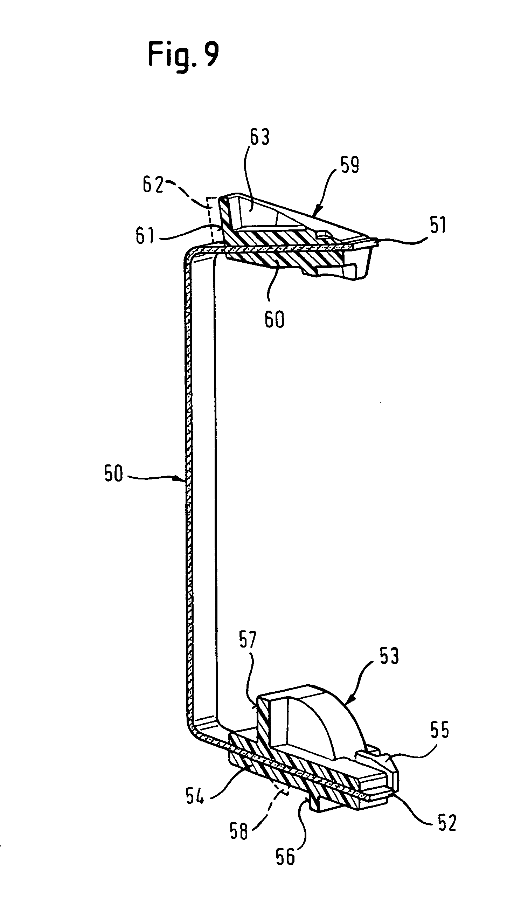

Das Band 50 ist an dem unteren Ende 52 mit einem ersten Befestigungsschuh 53 versehen, der aus Kunststoff gegossen ist und dazu dient, das Band 50 formschlüssig mit dem zweiten Befestigungskörper 20 zu verbinden. Das Band 50 ist an dem oberen Ende 51 mit einem zweiten Befestigungsschuh 59 versehen, der ebenfalls aus Kunststoff gegossen ist und dazu dient, das Band 50 formschlüssig mit dem ersten Befestigungskörper 10 zu verbinden. Wie insbesondere aus Fig. 9 ersichtlich, weist der Befestigungsschuh 53 einen Befestigungsabschnitt 54 auf, in den das Band 50 eingegossen ist. Der Befestigungsschuh 53 ist zudem mit seitlich angeordneten Rasthaken 55 versehen und weist an der Unterseite einen Vorsprung 58 auf. Dem Vorsprung 58 gegenüberliegend ist eine Wandung angeordnet, die eine Auflagefläche 56 bildet. Die Auflagefläche 56 setzt sich seitlich des Befestigungsabschnitts 54 fort und geht in eine gekrümmte Fläche über, wie aus Fig. 6 ersichtlich ist. Die Auflagefläche 56 endet an einer Wandung auf der Oberseite des Befestigungsschuhs 53, die eine Auflagefläche 57 bildet.

Fig. 9 läßt ferner erkennen, daß der Befestigungsschuh 59 einen Befestigungsabschnitt 60 aufweist, in den das Band 50 eingegossen ist. Die Oberseite des Befestigungsschuhs 59 ist mit einer Griffmulde 63 versehen. Eine rückwärtige Wandung des Befestigungsschuhs 59 bildet eine Auflagefläche 61, von der ein in Fig. 9 angedeuteter Steg 62 ragt.

Um das Band 50 mit dem ersten Befestigungskörper 10 und dem zweiten Befestigungskörper 20 zu verbinden, wird der Befestigungsschuh 53 in eine Öffnung des zweiten Befestigungskörpers 20 eingesetzt, die unterhalb der Öffnung 34 angeordnet ist. Die Auflageflächen 56, 57 liegen dabei an entsprechend ausgebildeten Absätzen des Befestigungskörpers 20 an, wie insbesondere die Figuren 1, 2 und 6 zu erkennen geben. Durch den Vorsprung 58 wird der Befestigungsschuh 53 zudem an dem Befestigungskörper 20 festgeklemmt.

Der an dem oberen Ende 51 angeordnete Befestigungsschuh 59 wird durch eine Öffnung 11 des ersten Befestigungskörpers 10 geführt und anschließend auf der Oberseite des Befestigungskörpers 10 angeordnet, wie die Figuren 2 bis 4 erkennen lassen. Zu diesem Zweck wird das Band 50 durch einen mit der Öffnung 11 verbundenen Längsschlitz 12 des Befestigungskörpers 10 gezogen und in einen annähernd orthogonal zu dem Längsschlitz 12 verlaufenden Querschlitz 13 geführt. Die Abmessungen des Längsschlitzes 12 und des Querschlitzes 13 sind geringfügig größer als die des Bandes 50 und deutlich kleiner als die des Befestigungsschuhs 59. Auf diese Weise wird der Befestigungsschuh 59 formschlüssig an dem Befestigungskörper 10 gehalten. Der Befestigungskörper 10 weist ferner einen Absatz 14 auf, an dem die Auflagefläche 61 des Befestigungsschuhs 59 anliegt. Der Längsschlitz 12 erstreckt sich in den Bereich des Absatzes 14, so daß der von der Auflagefläche 61 ragende Steg 62 in den Längsschlitz 12 eingreifen kann, um den Befestigungsschuh 59 präzise zu positionieren.

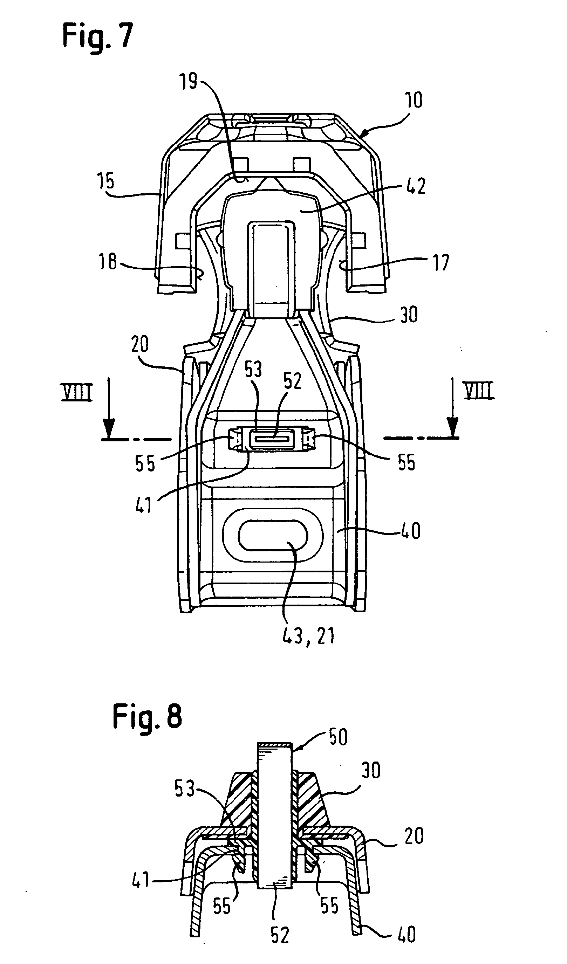

Wie insbesondere aus den Figuren 2, 7 und 8 ersichtlich, ist der Befestigungskörper 20 mit einem aus Metall gefertigten Anschlagkörper 40 verbunden, der unter anderem dazu dient, ein Zusammendrücken des Dämpfungskörpers 30 in der Schwingungsrichtung x zu begrenzen. Zu diesem Zweck weist der Befestigungskörper 10 einen im Querschnitt U-förmigen Anschlagabschnitt 15 auf, in den eine aus einem elastomeren Werkstoff, beispielsweise EPDM, bestehende Kuppe 42 des Anschlagkörpers 40 hinein ragt. Der Befestigungskörper 10 ist im Bereich des Anschlagabschnitts 15 mit einem aus einem elastomeren Werkstoff bestehenden Überzug 16 versehen, der an der Oberseite des Befestigungskörper 10 eine Mulde zur Aufnahme des Befestigungsschuhs 59 bildet, wie aus Fig. 4 ersichtlich ist, und an den Innenflächen des Anschlagabschnitts 15 Anschlagflächen 17, 18, 19 für die Kuppe 42 bildet, wie insbesondere in Fig. 7 zu erkennen ist. Der Überzug 16 ist einteilig mit dem Dämpfungskörper 30 ausgebildet und durch Vulkanisation stoffschlüssig mit dem Befestigungskörper 10 verbunden.

Um den Anschlagkörper 40 an dem Befestigungskörper 20 zu befestigen, sind Befestigungsöffnungen 21, 43 für eine nicht dargestellte Schraubenverbindung vorgesehen. Mittels der Schraubenverbindung läßt sich zugleich die Abgasanlage an dem Befestigungskörper 20 befestigen. Um eine vorläufige Fixierung des Anschlagkörpers 40 an dem Befestigungskörper 20 im nicht eingebauten Zustand der Haltevorrichtung zu erreichen, beispielsweise als Transportsicherung, ist der Anschlagkörper 40 mit einer Öffnung 41 versehen, in welche die Rasthaken 55 des Befestigungsschuhs 53 einrasten, wie aus den Figuren 7 und 8 ersichtlich ist. Der Befestigungsschuh 53 macht somit zusätzliche Befestigungsmittel entbehrlich.

Die zuvor beschriebene Haltevorrichtung ermöglicht eine schwingungsdämpfende Aufhängung der Abgasanlage an dem Unterboden eines Kraftfahrzeugs. Grund hierfür ist in erste Linie der Dämpfungskörper 30, der aufgrund seiner elastischen Verformungsfähigkeit Schwingungen der Abgasanlage zuverlässig dämpft. Hierzu trägt bei, daß vergleichsweise große Schwingungsamplituden, die in der ersten Schwingungsrichtung x zu einer Zug- und Druckbeanspruchung des Dämpfungskörpers 30 führen, keine übermäßige und damit das Elastizitätsverhalten des Dämpfungskörpers 30 beeinträchtigende Verformungen hervorrufen. Denn das undehnbare Band 50 verhindert eine zu große Ausdehnung des Dämpfungskörpers 30, wohingegen der Anschlagkörper 40 einer unverhältnismäßig großen Stauchung entgegenwirkt. Darüber hinaus ermöglicht die in den Anschlagabschnitt 15 hineinragende Kuppe 42 des Anschlagkörpers 40 eine Dämpfung von Schwingungen, die in einer zweiten Schwingungsrichtung y auftreten und zu einer Biege- oder Torsionsbeanspruchung des Dämpfungskörpers 30 führen.

Die zuvor beschriebene Haltevorrichtung zeichnet sich weiterhin durch eine einfache Montage des Bandes 50 aus. Dies ist vor allem auf den ersten Befestigungsschuh 53 und den zweiten Befestigungsschuh 59 zurückzuführen, die formschlüssig mit dem ersten Befestigungskörper 10 beziehungsweise dem zweiten Befestigungskörper 20 verbunden sind. Nicht zuletzt ermöglicht der erste Befestigungsschuh 53 eine vorläufige Fixierung des Anschlagkörpers 40 an dem Befestigungskörper 20 und trägt somit zu einer hohen Funktionsintegration bei.

### Bezugszeichenliste

- 10: erster Befestigungskörper
- 11: Öffnung
- 12: Längsschlitz
- 13: Querschlitz
- 14: Absatz
- 15: Anschlagabschnitt
- 16: Überzug
- 17: Anschlagfläche
- 18: Anschlagfläche
- 19: Anschlagfläche

- 20: zweiter Befestigungskörper
- 21: Befestigungsöffnung

- 30: Dämpfungskörper
- 31: Einschnürung
- 32: Einschnürung
- 33: Öffnung
- 34: Öffnung

- 40: Anschlagkörper
- 41: Öffnung
- 42: Kuppe
- 43: Befestigungsöffnung

- 50: Band
- 51: oberes Ende
- 52: unteres Ende
- 53: erster Befestigungsschuh

- 54: Befestigungsabschnitt
- 55: Rasthaken
- 56: Auflagefläche
- 57: Auflagefläche
- 58: Vorsprung
- 59: zweiter Befestigungsschuh
- 60: Befestigungsabschnitt
- 61: Auflagefläche
- 62: Steg
- 63: Griffmulde

- x: erste Schwingungsrichtung
- y: zweite Schwingungsrichtung

## Patentansprüche

1. Haltevorrichtung, insbesondere zum elastischen Aufhängen einer Abgasanlage eines Kraftfahrzeugs, mit einem ersten Befestigungskörper (10), der an einem ersten Bauteil befestigbar ist, einem zweiten Befestigungskörper (20), der an einem zweiten Bauteil befestigbar ist, einem zumindest in einer ersten Schwingungsrichtung (x) elastisch verformbaren Dämpfungskörper (30), der den ersten Befestigungskörper (10) und den zweiten Befestigungskörper (20) miteinander verbindet, und einem im wesentlichen undehnbaren Band (50), das an einem oberen Ende (51) mit dem ersten Befestigungskörper (10) und an einem unteren Ende (52) mit dem zweiten Befestigungskörper (20) verbunden ist und eine Ausdehnung des Dämpfungskörpers (30) in der ersten Schwingungsrichtung (x) begrenzt, wobei der zweite Befestigungskörper (20) mit einem Anschlagkörper (40) verbunden ist, der ein Zusammendrücken des Dämpfungskörpers (30) zumindest in der ersten Schwingungsrichtung (x) begrenzt, und wobei der erste Befestigungskörper (10) einen im Querschnitt U-förmigen Anschlagabschnitt (15) aufweist und der Anschlagkörper (40) mit einer Kuppe (42) versehen ist, die in den Anschlagabschnitt (15) hineinragt.

2. Haltevorrichtung nach Anspruch 1, **dadurch gekennzeichnet, dass** das Band (50) an dem unteren Ende (52) mit einem ersten Befestigungsschuh (53) versehen ist, der formschlüssig und/oder kraftschlüssig an dem zweiten Befestigungskörper (20) festlegbar ist.

3. Haltevorrichtung nach Anspruch 2, **dadurch gekennzeichnet, dass** der erste Befestigungsschuh (53) mit dem Anschlagkörper (40) verbindbar ist.

4. Haltevorrichtung nach Anspruch 3, **dadurch gekennzeichnet, dass** der erste Befestigungsschuh (53) wenigstens einen Rasthaken (55) aufweist, der in einer Öffnung (41) des Anschlagkörpers (40) einrastet.

5. Haltevorrichtung nach einem der Ansprüche 1 bis 4, **dadurch gekennzeichnet, dass** das Band (50) an dem oberen Ende (51) mit einem zweiten Befestigungsschuh (59) versehen ist, der formschlüssig und/oder kraftschlüssig an dem ersten Befestigungskörper (10) festlegbar ist.

6. Haltevorrichtung nach Anspruch 5, **dadurch gekennzeichnet, dass** der erste Befestigungskörper (10) eine Öffnung (11) aufweist, durch die der zweite Befestigungsschuh (59) durchsteckbar ist, wobei die Öffnung (11) mit einer Ausnehmung (12, 13) verbunden ist, deren Abmessungen grösser als die des Bandes (50) und kleiner als die des zweiten Befestigungsschuhs (59) sind.

7. Haltevorrichtung nach Anspruch 6, **dadurch gekennzeichnet, dass** die Ausnehmung einen Querschlitz (13) und einen den Querschlitz (13) mit der Öffnung (11) verbindenden Längsschlitz (12) aufweist, wobei der Querschlitz (13) annähernd orthogonal zu dem Längsschlitz (12) angeordnet ist.

8. Haltevorrichtung nach Anspruch 7, **dadurch gekennzeichnet, dass** der erste Befestigungskörper (10) einen Absatz (14) aufweist und der zweite Befestigungsschuh (59) mit einer Auflagefläche (61) versehen ist, die an dem Absatz (14) anliegt.

9. Haltevorrichtung nach Anspruch 8, **dadurch gekennzeichnet, dass** sich der Längsschlitz (12) in den Bereich des Absatzes (14) erstreckt und der zweite Befestigungsschuh (59) mit einem Steg (62) versehen ist, der in den Längsschlitz (12) eingreift.

10. Haltevorrichtung nach einem der Ansprüche 1 bis 9, **dadurch gekennzeichnet, dass** der erste Befestigungskörper (10) zumindest im Bereich des Anschlagabschnitts (15) mit einem Überzug (16) versehen ist, der aus einem elastisch verformbaren Werkstoff besteht.

11. Haltevorrichtung nach Anspruch 10, **dadurch gekennzeichnet, dass** der Überzug (16) einteilig mit dem Dämpfungskörper (30) ausgebildet ist.

12. Haltevorrichtung nach einem der Ansprüche 1 bis 11, **dadurch gekennzeichnet, dass** der Dämpfungskörper (30) und/oder die Kuppe (42) und/oder der Überzug (16) aus einem elastomeren Werkstoff, vorzugsweise Gummi, gefertigt sind.

13. Haltevorrichtung nach einem der Ansprüche 1 bis 12, **dadurch gekennzeichnet, dass** der Dämpfungskörper (30) annähernd orthogonal zur ersten Schwingungsrichtung (x) wenigstens eine Einschnürung (31, 32) aufweist.

14. Haltevorrichtung nach einem der Ansprüche 1 bis 13, **dadurch gekennzeichnet, dass** der Dämpfungskörper (30) mit wenigstens einer Öffnung (33, 34) versehen ist.

15. Haltevorrichtung nach einem der Ansprüche 1 bis 14, **dadurch gekennzeichnet, dass** der erste Befestigungskörper (10) und/oder der zweite Befestigungskörper (20) und/oder der Anschlagkörper (40) aus Metall gefertigt sind.

16. Haltevorrichtung nach einem der Ansprüche 1 bis 15, **dadurch gekennzeichnet, dass** das Band (50) aus einem Gewebe besteht, das vorzugsweise aus Polyesterfasern oder Polyamidfasern gefertigt ist.

## Claims

1. A mounting fixture, particularly for resilient suspension of an automotive exhaust system comprising a first securement member (10) for securing to a first component, a second securement member (20) for securing to a second component, a damping member (30) resilient at least in a first direction of vibration (x), said damping member (30) interconnecting said first securement member (10) and said second securement member (20), and a substantially non-expandable band (50) connected at an upper end (51) to said first securement member (10) and at a lower end (52) to said second securement member (20) in restricting extension of said damping member (30) in the first direction of vibration (x), said second securement member (20) being connected to a stopper (40) restricting compression of said damping member (30) at least in the first direction of vibration (x) and said first securement member (10) comprising a stopper portion (15) U-shaped cross-sectionally and said stopper (40) featuring a rounded tip (42) protruding into the stopper portion (15).

2. The mounting fixture as set forth in claim 1, **characterized in that** said band (50) is provided at said lower end (52) with a first lug (53) positively and/or non-positively definable at said second securement member (20).

3. The mounting fixture as set forth in claim 2, **characterized in that** said first lug (53) is connectable to said stopper (40).

4. The mounting fixture as set forth in claim 3, **characterized in that** said lug (53) comprises at least one catch hook (55) for latching in an opening (41) of said stopper (40).

5. The mounting fixture as set forth in any of the claims 1 to 4, **characterized in that** said band (50) is provided at said upper end (51) with a second lug (59) positively and/or non-positively definable at said first securement member (10).

6. The mounting fixture as set forth in claim 5, **characterized in that** said first securement member (10) comprises an opening (11) through which said second lug (59) is insertable, said opening (11) being connected to a recess (12, 13) dimensioned larger than that of said band (50) and smaller than that of said second lug (59).

7. The mounting fixture as set forth in claim 6, **characterized in that** said recess comprises a transverse slot (13) and a longitudinal slot (12) connecting said transverse slot (13) to said opening (11), said transverse slot (13) being arranged roughly orthogonal to said longitudinal slot (12).

8. The mounting fixture as set forth in claim 7, **characterized in that** said first securement member (10) comprises a boss (14) and said second lug (59) is provided with a seat (61) resting said boss (14).

9. The mounting fixture as set forth in claim 8, **characterized in that** said longitudinal slot (12) extends into the region of said boss (14) and said second lug (59) is provided with a web (62) engaging said longitudinal slot (12).

10. The mounting fixture as set forth in any of the claims 1 to 9, **characterized in that** at least in the region of said stopper portion (15) said first securement member (10) is provided with a coating (16) consisting of an elastomer.

11. The mounting fixture as set forth in claim 10, **characterized in that** said coating (16) is configured integrally with said damping member (30).

12. The mounting fixture as set forth in any of the claims 1 to 11, **characterized in that** said damping member (30) and/or rounded tip (42) and/or coating (16) are made of an elastomeric material, preferably rubber.

13. The mounting fixture as set forth in any of the claims 1 to 12, **characterized in that** said damping member (30) comprises roughly orthogonal to said first direction of vibration (x) at least one constriction (31, 32).

14. The mounting fixture as set forth in any of the claims 1 to 13, **characterized in that** said damping member (30) is provided with at least one opening (33, 34).

15. The mounting fixture as set forth in any of the claims 1 to 14, **characterized in that** said first securement member (10) and/or said second securement member (20) and/or said stopper (40) are made of metal.

16. The mounting fixture as set forth in any of the claims 1 to 15, **characterized in that** said band (50) consists of a fabric preferably made from fibers of polyester or polyamide.

## Revendications

1. Dispositif de retenue, en particulier pour la suspension élastique d'une installation à gaz d'échappement d'un véhicule automobile, comportant un premier corps de fixation (10) qui est susceptible d'être fixé sur un premier composant, un second corps de fixation (20) qui est susceptible d'être fixé sur un second composant, un corps amortisseur (30) qui est élastiquement déformable au moins dans une première direction d'oscillation (x) et qui relie le premier corps de fixation (10) et le second corps de fixation (20) l'un à l'autre, et un ruban (50) sensiblement non extensible qui est relié par une extrémité supérieure (51) au premier corps de fixation (10) et par une extrémité inférieure (52) au second corps de fixation (20) et qui limite un allongement du corps amortisseur (30) dans la première direction d'oscillation (x), le second corps de fixation (20) étant relié à un corps de butée (40) qui limite une compression du corps amortisseur (30) au moins dans la première direction d'oscillation (x), le premier corps de fixation (10) comprenant un tronçon de butée (15) de section transversale en forme de U et le corps de butée (40) étant pourvu d'une calotte (42) qui pénètre dans le tronçon de butée (15).

2. Dispositif de retenue selon la revendication 1, **caractérisé en ce qu'**à l'extrémité inférieure (52) le ruban (50) est pourvu d'un premier patin de fixation (53) qui est susceptible d'être immobilisé par coopération de formes et/ou par coopération de forces sur le second corps de fixation (20).

3. Dispositif de retenue selon la revendication 2, **caractérisé en ce que** le premier patin de fixation (53) est susceptible d'être relié au corps de butée (40).

4. Dispositif de retenue selon la revendication 3, **caractérisé en ce que** le premier patin de fixation (53) comprend au moins un crochet d'enclenchement (55) qui vient s'enclencher dans une ouverture (41) du corps de butée (40).

5. Dispositif de retenue selon l'une des revendications 1 à 4, **caractérisé en ce qu'**à l'extrémité supérieure (51) le ruban (50) est pourvu d'un second patin de fixation (59) qui est susceptible d'être immobilisé par coopération de formes et/ou par coopération de forces sur le premier corps de fixation (10).

6. Dispositif de retenue selon la revendication 5, **caractérisé en ce que** le premier corps de fixation (10) présente une ouverture (11) à travers laquelle peut être enfiché le second patin de fixation (59), l'ouverture (11) étant en communication avec un évidement (12, 13) dont les dimensions sont supérieures à celles du ruban (50) et inférieures à celles du second patin de fixation (59).

7. Dispositif de retenue selon la revendication 6, **caractérisé en ce que** l'évidement présente une fente transversale (13) et une fente longitudinale (12) qui relie la fente transversale (13) à l'ouverture (11), la fente transversale (13) étant disposée approximativement orthogonalement à la fente longitudinale (12).

8. Dispositif de retenue selon la revendication 7, **caractérisé en ce que** le premier corps de fixation (10) comprend un talon (14) et le second patin de fixation (59) est pourvu d'une surface d'appui (61) qui prend appui contre le talon (14).

9. Dispositif de retenue selon la revendication 8, **caractérisé en ce que** la fente longitudinale (12) s'étend jusque dans la zone du talon (14), et **en ce que** le second patin de fixation (59) est pourvu d'une barrette (62) qui vient s'engager dans la fente longitudinale (12).

10. Dispositif de retenue selon l'une des revendications 1 à 9, **caractérisé en ce qu'**au moins dans la zone du tronçon de butée (15) le premier corps de fixation (10) est pourvu d'un revêtement (16) qui est constitué d'un matériau élastiquement déformable.

11. Dispositif de retenue selon la revendication 10, **caractérisé en ce que** le revêtement (16) est réalisé d'un seul tenant avec le corps amortisseur (30).

12. Dispositif de retenue selon l'une des revendications 1 à 11, **caractérisé en ce que** le corps amortisseur (30) et/ou la calotte (42) et/ou le revêtement (16) sont fabriqués d'un matériau élastomère, de préférence de caoutchouc.

13. Dispositif de retenue selon l'une des revendications 1 à 12, **caractérisé en ce que** le corps amortisseur (30) présente au moins un rétrécissement (31, 32) approximativement orthogonal à la première direction d'oscillation (x).

14. Dispositif de retenue selon l'une des revendications 1 à 13, **caractérisé en ce que** le corps amortisseur (30) est pourvu d'au moins une ouverture (33, 34).

15. Dispositif de retenue selon l'une des revendications 1 à 14, **caractérisé en ce que** le premier corps de fixation (10) et/ou le second corps de fixation (20) et/ou le corps de butée (40) sont fabriqués en métal.

16. Dispositif de retenue selon l'une des revendications 1 à 15, **caractérisé en ce que** le ruban (50) est constitué d'un tissu qui est fabriqué de préférence à partir de fibres de polyester ou de fibres de polyamide.
